# EUROPÄISCHE PATENTSCHRIFT

(11) **EP 2 054 197 B1**
(45) Veröffentlichungstag und Bekanntmachung des Hinweises auf die Patenterteilung: **07.07.2010**
(21) Anmeldenummer: 07801857.9
(22) Anmeldetag: 21.08.2007
(51) Int. Cl.: B25J 15/04

(54) **KUPPLUNGSSYSTEM MIT EINEM KRAFTSENSOR UND EINER AUSWERTEEINHEIT**
COUPLING SYSTEM WITH A FORCE SENSOR AND AN EVALUATION UNIT
SYSTÈME DE COUPLAGE COMPRENANT UN CAPTEUR DE FORCE ET UNE UNITÉ D'INTERPRÉTATION

(30) Priorität: 23.08.2006 DE 102006040034
(43) Veröffentlichungstag der Anmeldung: 06.05.2009
(73) Patentinhaber: Staeubli Tec-Systems GmbH, 95448 Bayreuth (DE)
(72) Erfinder: GEYER, Gerhard, 95326 Kulmbach (DE); ERMER, Norbert, 95490 Mistelgau (DE)
(74) Vertreter: Pfenning, Meinig & Partner GbR
(86) Internationale Anmeldenummer: PCT/EP2007/007429
(87) Internationale Veröffentlichungsnummer: WO 2008/022793

(56) Entgegenhaltungen:
- JP-A- 5 301 186
- JP-A- 7 237 165
- US-A- 5 145 227
- US-A1- 2004 180 769

## Beschreibung

Die Erfindung betrifft ein Kupplungssystem, insbesondere ein Werkzeugwechselsystem für Roboter, eine Kupplungsanordnung, ein Verfahren zum mechanischen Kuppeln eines Kupplungssystems, und ein Verfahren zur Messung der mechanischen Belastung eines Kupplungssystems beim Kuppeln und/oder im gekuppelten Zustand.

Kupplungssysteme, welche ein erstes Kupplungsteil und zumindest ein zweites Kupplungsteil, welches mit dem ersten Kupplungsteil über zumindest eine Kupplung kuppelbar ist, aufweisen, sind grundsätzlich bekannt. Beispielsweise kann solche eine Kupplung eine mechanische Kupplung, eine elektrische Kupplung, oder eine Kupplung zum Kuppeln von Medien wie Wasser, Druckluft usw. sein. Des Weiteren sind Kupplungssysteme bekannt, welche mehrere Kupplungen aufweisen, beispielsweise mehrere elektrische Kupplungen und eine Druckluftkupplung. In diesem Falle spricht man von einem Multikupplungssystem.

Des Weiteren ist es bekannt, derartige Kupplungssysteme für die Verbindung von Werkzeugen mit einem Roboter zu verwenden. Insbesondere sind Kupplungssysteme bekannt, welche als Werkzeugwechselsysteme bezeichnet werden, die es ermöglichen, das sich am Roboterarm befindende Werkzeug schnell und einfach zu wechseln. Üblicherweise weisen derartige Werkzeugwechselsysteme eine Verriegelungseinheit und einen mit der Verriegelungseinheit kuppelbaren Adapter auf. Die Verriegelungseinheit wird fest mit einem Arm des Roboters verbunden, während ein oder mehrere Adapter mit geeigneten Werkzeugen verbunden werden. Damit ist eine einheitliche Kupplung zwischen Roboter und Werkzeugen geschaffen. Eine derartiges Kupplungssystem umfasst zumindest eine mechanische Kupplung, es können aber noch weitere Kupplungen vorgesehen sein, die es ermöglichen, beispielsweise Strom, Kühlwasser usw. von der Roboterseite zur Werkzeugseite zu übertragen.

Nachteil derartiger Kupplungssysteme ist, dass der Kupplungsbereich eine Schwachstelle im Gesamtsystem darstellt. Beispiele hierfür sind, dass die Kupplungsteile nicht richtig miteinander verbunden sind (was beispielsweise durch ein fehlerhaftes Einkuppeln) möglich wäre), die Kupplung verschmutzt ist, oder die Kupplungen selbst beschädigt sind, was aufgrund dessen, dass die Kupplungsbereiche in der Regel relativ exponiert sind, ebenfalls möglich ist. Auch eine unsachgemäße Bedienung kann sich auf die Funktionstüchtigkeit der Kupplung auswirken.

Aus der JP-A-07 237 165 und aus der US-A-5 145 227 sind Kupplungssysteme mit zwei kuppelbaren Kupplungsteilen und einem Kraftsensor bekannt, wobei der erste Kupplungsteil eine zapfenförmige Erhebung und der zweite Kupplungsteil eine korrespondierende Ausparung aufweist. Mittels dem Kraftsensor wird zur Überprüfung der Kupplung die mechanische Belastung gemessen und ausgewortet, die beim Kuppeln der Kupplungsteile auftritt.

Aufgabe der vorliegenden Erfindung ist es somit, ein Kupplungssystem zu schaffen, welches es ermöglicht, die Überprüfung des Zustands einer oder mehrerer Kupplungen im Kupplungsbereich zu überprüfen. Eine weitere Aufgabe der Erfindung ist es, eine Kupplungsanordnung zu schaffen, die ein fehlerfreies Kuppeln der Kupplungsteile eines Kupplungssystems ermöglicht. Des Weiteren ist es Aufgabe der Erfindung, ein Verfahren zum mechanischen Kuppeln eines Kupplungssystems und ein Verfahren zur Messung der mechanischen Belastung eines Kupplungssystems zu schaffen.

Diese Aufgaben werden durch ein Kupplungssystem, ein Verfahren zum mechanischen Kuppeln und ein Verfahren zur Messung der mechanischen Belastung nach den unabhängigen Ansprüchen gelöst.

Erfindungsgemäß ist es somit möglich, den Zustand der Kupplung während des Einkuppelns und/oder im eingekuppelten Zustand auf ihre Funktionstüchtigkeit hin zu überprüfen. Aufgrund der Messwerte, die über die Auswerteeinheit abrufbar sind, ist es möglich eine entsprechende Reaktion auszulösen, beispielsweise ein Austausch der Werkzeuge, eine Wartung, oder eine Korrektur der Bewegung. Insbesondere für Systeme, bei denen häufig gekuppelt wird, beispielsweise bei Werkzeugwechselsystemen, und damit die Gefahr relativ hoch ist, dass die Kupplung nicht betriebsgemäß zustande gekommen ist bzw. die Kupplung im Laufe des Betriebs beschädigt wurde, ist die Verwendung eines derartigen Systems zur Überprüfung vorteilhaft.

Die Erfindung beschränkt sich nicht auf bestimmte Arten der Kupplung. Als Kupplungsarten sind beispielsweise möglich mechanische Kupplungen, elektrische Kupplungen, Kupplungen von Medienleitungen, beispielsweise für Wasser, Druckluft, Ö1 usw.

Beispielsweise lässt sich für die Überprüfung einer Medienkupplung für ein gasförmiges Medium, beispielsweise Druckluft, ein Geräuschsensor einsetzen.

Mittels den mindestens einen Kraftsensor sind die mechanischen Kräfte, die über den Adapter auf die Verriegelungseinheit ausgeübt werden, zumindest teilweise messbar.

Ein derartiger Sensor ermöglicht es, die mechanische Belastung des Kupplungssystems festzustellen. Indirekt läßt sich damit auch die mechanische Belastung auf das Werkzeug, das mit dem Adapter verbunden ist, beobachten.

Als Kraftsensoren eignen sich beispielsweise Dehnmessstreifen oder Piezoelemente. Des Weiteren ist auch ein berührungsloses Messen, beispielsweise über optische Sensoren, grundsätzlich möglich.

Die Verriegelungseinheit weist zumindest eine zapfenförmige Erhebung auf, und der Adapter zumindest eine zu der zapfenförmigen Erhebung korrespondierende Aussparung, wobei zapfenförmige Erhebung und Aussparung derart ausgebildet und angeordnet sind, dass beim Kuppeln des Adapters und der Verriegelungseinheit die zapfenförmige Erhebung der Verriegelungseinheit in die Aussparung des Adapters zur Führung des Adapters eingreift, und im gekuppelten Zustand der Adapter über den Zapfen der Verriegelungseinheit mechanisch mit der Verriegelungseinheit verbunden ist, und der Kraftsensor derart angeordnet ist, dass mittels des Kraftsensors eine mechanische Belastung des Zapfens messbar ist.

Der Kraftsensor ist erfindungsgemäß derart angeordnet, dass die mechanische Belastung des Zapfens mindestens in zwei Richtungen, vorzugsweise in allen drei Raumrichtungen messbar ist. Falls notwendig, sind hierzu mehrere Sensoren vorgesehen, insbesondere ein Sensor pro Raumrichtung.

Der Kraftsensor kann insbesondere am ersten oder am zweiten Kupplungsteil angebracht sein. Erfindungsgemäß bevorzugt ist, dass sich der mindestens eine Sensor am ersten Kupplungsteil, an dem sich auch die Auswerteeinheit befindet, angebracht ist. Auf diese Weise wird zum einen ein kompaktes System geschaffen, da die Verbindungen zur Ansteuerung und zum Auslesen des Sensors mit der Auswerteeinheit einfach herzustellen sind. Des Weiteren ist es hierdurch nicht mehr notwendig, im Falle von mehreren zweiten Kupplungsteilen, die mit dem ersten Kupplungsteil verbindbar sind, jedes der zweiten Kupplungsteile mit Sensoren auszustatten. Zusätzlich ermöglicht die Anbringung des Sensors am ersten Kupplungsteil, Messsignale unabhängig von dem Zustand und der Position des zweiten Kupplungsteils zu messen, insbesondere auch während des Kuppelvorgangs.

Vorzugsweise ist das erste Kupplungsteil mit der Versorgerseite einer Vorrichtung, beispielsweise mit einem Roboterarm, verbindbar. Dies ermöglicht es, Sensor und Auswerteeinheit unabhängig von einer Kupplung zu betreiben. Des Weiteren müssen für den Betrieb der Auswerteeinheit und/oder des Sensors vorteilhafte oder sogar notwendige Verbindungen, beispielsweise ein Stromversorgung oder ein Datenkabel, nicht selbst mit zusätzlichen Kupplungen verbunden werden.

Die Auswerteeinheit kann beispielsweise eine Elektronik mit einer Schnittstelle sein, um die aufgenommenen Messdaten nach außen weitergeben zu können. Die Weitergabe der Daten kann beispielsweise an ein Display erfolgen, oder aber in ein Netzwerk. Erfindungsgemäß bevorzugt ist, dass sich die Daten über Fernübertragung abrufen lassen. Dies ermöglicht das Abfragen der Daten, ohne dass ein Datenkabel direkt mit der Auswerteeinheit verbunden werden muss, was unter Umständen sehr aufwendig oder sogar unmöglich sein kann. Des Weiteren kann die Auswerteeinheit eine Steuereinheit beinhalten, die in Abhängigkeit der erfassten Messsignale eine Reaktion bewirken kann, beispielsweise eine Kupplung unterbrechen kann. Vorzugsweise ist die Auswerteeinheit mit einer programmierbaren Rechnereinheit ausgestattet, was ermöglicht, die erfassten Messsignale über Programme zu bearbeiten, und über Programme geeignete Reaktionen zu veranlassen.

Als Messgrößen eignen sich beispielsweise Belastungsgrößen wie mechanische Spannung, mechanische Verformung, Positionen, insbesondere Bewegungen und Relativbewegung, Drücke, Temperaturen, elektrische Widerstände, usw.

Eine vorteilhafte Weiterbildung der Erfindung sieht vor, dass die Auswerteeinheit einen dauerhaften Speicher aufweist, mittels dem die Signale des Sensors über eine Zeitperiode dauerhaft speicherbar sind.

Diese Weiterbildung ermöglicht es, die Historie des Kupplungssystems zu betrachten. Dies ist insbesondere für eine Wartung des Kupplungssystems, aber auch für eine Wartung der Elemente, die mit dem Kupplungssystem verbunden sind und die ebenfalls Auswirkungen auf die von den Sensoren erfassten Messsignale haben, vorteilhaft. Über die Analyse der im Speicher abgelegten Werte ist es nicht nur möglich, zu entscheiden, ob eine Wartung des Systems notwendig ist. Ebenfalls ist es grundsätzlich möglich, anhand der Werte zu beurteilen, ob das Kupplungssystem und/oder die mit dem Kupplungssystem verbundenen Teile richtig gehandhabt wurden. Insbesondere können auf die Weise unsachgemäße Belastungen oder falscher Betrieb nachträglich erkannt werden. Auf der anderen Seite lässt sich anhand der Historie der Messsignale erkennen, wann eine Wartung sinnvoll ist, d.h., es kann genau abgeschätzt werden, wie lange die Vorrichtung weiter betrieben werden kann.

Vorzugsweise ist in der Auswerteeinheit ein Stromversorgungssystem integriert, das zumindest einen kurzen Stromausfall überbrücken kann. Ein derartiges System könnte beispielsweise durch einen Kondensator gebildet sein.

Vorzugsweise sind die Auswerteeinheit und der Speicher versiegelt, um diese vor Missbrauch zu schützen. Vorzugsweise weist die Auswerteeinheit ein Identifikationssystem auf, das es ermöglicht, die mit dem zweiten Kupplungsteil verbundenen Elemente, beispielsweise Werkzeuge, zu identifizieren. Die Identifikation könnte beispielsweise als Wert im dauerhaften Speicher abgelegt werden. Dies ermöglicht es nachzuvollziehen, unter welchen Bedingungen das Kupplungssystem eingesetzt wurde.

Eine weitere vorteilhafte Weiterbildung sieht vor, dass das Kupplungssystem ein Multikupplungssystem, vorzugsweise ein Werkzeugwechselsystem ist, wobei das erste Kupplungsteil eine Verriegelungseinheit für die Befestigung an einem Roboter und das zweite Kupplungsteil ein Adapter für die Befestigung an einem Werkzeug ist.

Der Adapter kann ein eigenständiges Bauteil sein, oder aber auch im Werkzeug integriert sein.

Die Verriegelungseinheit kann weitere Module enthalten, beispielsweise Module, über die Daten, Strom, Wasser usw. an ein Werkzeug übertragbar sind. Diesbezüglich weist der Adapter vorteilhafterweise korrespondierende Module auf, über die die Übertragung der genannten Medien über Koppelung der miteinander korrespondierenden Module von Verriegelungseinheit und Adapter möglich ist.

Vorzugsweise sind mindestens zwei zapfenförmige Erhebungen mit korrespondierenden Aussparungen, besonders bevorzugt mindestens drei zapfenförmige Erhebungen mit korrespondierenden Aussparungen vorgesehen. Hierdurch wird zum einen die mechanische Stabilität des Kupplungssystems erhöht, zum anderen ist die mechanische Belastung des Kupplungssystems, insbesondere auf Biegung und Torsion, durch die verschiedenen Positionen der Sensoren gut nachvollziehbar. Vorzugsweise sind die zapfenförmigen Erhebungen zueinander parallel ausgerichtet. Des Weiteren sind vorzugsweise die zapfenförmigen Erhebungen gleichmäßig über eine Kupplungsfläche des ersten Kupplungsteils verteilt, um eine im gekuppelten Zustand von erstem und zweitem Kupplungsteil wirkende mechanische Belastung möglichst gleichmäßig aufnehmen zu können.

Vorzugsweise ist die mindestens eine zapfenförmige Erhebung an ihrer Spitze angeschrägt, besonders bevorzugt konisch ausgebildet. Hierdurch wird der Kupplungsvorgang mit dem Adapter erleichtert.

Vorzugsweise weist die vom Adapter zur zapfenförmigen Erhebung korrespondierende Aussparung einen zur Spitze korrespondierend geformten Boden auf. Ist die Spitze des Zapfens angeformt oder konisch, so kann mit einer derartigen Aussparung eine Klemmwirkung erreicht werden, die die Kupplung von Verriegelungseinheit und Adapter zusätzlich mechanisch stabilisiert.

Eine weitere vorteilhafte Weiterbildung der Erfindung sieht vor, dass der mindestens eine Kraftsensor in oder an der mindestens einen zapfenförmigen Erhebung angeordnet ist.

Vorzugsweise ist der Sensor direkt im oder am Zapfen, um eine gute mechanische Verbindung mit mechanisch belasteten Bereich herzustellen, um eine möglichst unmittelbare Messung mit hoher Auflösung zu ermöglichen.

Insbesondere können mehrere Kraftsensoren pro Zapfen vorgesehen sein, insbesondere um Belastungen in verschiedene Richtungen messen zu können.

Eine weitere vorteilhafte Weiterbildung sieht vor, dass die Verriegelungseinheit zumindest einen Positionssensor aufweist, der die Position von Verriegelungseinheit und Adapter in zumindest einer Position vor der Kupplungsposition überprüft.

Ein derartiger Sensor eignet sich insbesondere dafür, zu überprüfen, ob der Kupplungsvorgang bis zu dieser Position hin betriebsgemäß erfolgt ist.

Als Positionssensoren eignen beispielsweise optische Sensoren oder magnetische Sensoren. Vorzugsweise sind mehrere Sensoren vorgesehen, um eine möglichst genaue Positionsbestimmung zu ermöglichen. Gegebenenfalls sind die Sensoren vorzugsweise auf den zapfenförmigen Erhebungen angeordnet.

Eine vorteilhafte Weiterbildung der Erfindung sieht vor, dass die Verriegelungseinheit einen Kupplungssensor aufweist, mittels dem feststellbar ist, ob Verriegelungseinheit und Adapter gekuppelt sind.

Als Kupplungssensor eignet sich beispielsweise ein Magnetsensor.

Des Weiteren schafft die Erfindung ein Kupplungssystem gemäß Anspruch 9, enthaltend ein Multikupplungssystem und eine Kupplungsvorrichtung, mittels der der mindestens eine Adapter und Verriegelungseinheit des Multikupplungssystems miteinander zumindest teilweise automatisch kuppelbar sind, sowie eine Steuereinheit , über die die Kupplungsvorrichtung steuerbar ist und die die Signale des mindestens einen Kraftsensors erfassen und bearbeiten kann, zum zumindest teilweisen automatischen Nachregeln der Position von Verriegelungseinheit und Adapter während des Einkuppelns.

Mittels des Kraftsensors lassen sich insbesondere die Messsignale, die der Kraftsensor während des Einkuppelns aufnimmt, mit Sollwerten vergleichen. Liegt eine genügende Übereinstimmung zwischen Ist- und Sollwerten vor, so deutet dies darauf hin, dass der Kupplungsvorgang ordnungsgemäß vonstatten geht. Bei einer zu großen Diskrepanz zwischen den Ist- und Sollwerten ist die Kupplungsvorrichtung in der Lage, die Positionen von Verriegelungseinheit und Adapter derart zu korrigieren, dass die Istwerte in ausreichender Nähe der Sollwerte liegen. Es ist damit ein Rückkopplungssystem realisiert.

Die Kupplungsanordnung umfasst beispielsweise einen Roboter, mit dem die Verrieglungseinheit verbunden ist und ein Werkzeug, welches mit einem zur Verriegelungseinheit korrespondierenden Adapter verbunden ist, das beispielsweise sich in einer Werkzeugablage befindet. Der Roboter wäre in diesem Falle eine Kupplungsvorrichtung. Die Steuereinheit der Kopplungsanordnung wäre in diesem Falle eine Steuereinheit des Roboters.

Im Betrieb ruft die Steuereinheit beispielsweise die Messsignale des Sensors über die Auswerteeinheit ab. Alternativ ist es ebenso möglich, dass die Auswerteeinheit aktiv Steuersignale an die Steuereinheit übersendet.

Die Rückkopplung und damit ein Nachregeln der Position von Verriegelungseinheit und Adapter ist erst dann möglich, wenn der Kraftsensor Signale aufnimmt. Dies ist zumindest dann der Fall, wenn Verriegelungseinheit und Adapter mechanisch in Kontakt treten. Die erfindungsgemäße Kupplungsanordnung ermöglicht eine fehlerfreie, automatische Durchführung des letzten Schrittes des Einkuppelvorgangs, d.h., vom Eingriff von Adapter und Verriegelungseinheit bis zur endgültigen Kupplung. Eine Automatisierung gerade dieses Schrittes des Einkuppelvorgangs ist besonders vorteilhaft, da bei diesem Schritt durch falsches Einkuppeln möglicherweise nicht nur eine ungenügende Kupplung erzeugt wird, sondern möglicherweise sogar die zu kuppelnden Teile einschließlich des Werkzeugwechselsystems mechanisch beschädigt werden könnten.

Vorzugsweise sind mehrere Kraftsensoren an der Verriegelungseinheit im Kupplungsbereich vorhanden, um die mechanische Belastung, die beim Einkuppeln über den Adapter auf die Verriegelungseinheit wirkt, für ein Nachregeln ausreichend messen zu können. Des Weiteren weist vorteilhafterweise die Verriegelungseinheit eine oben beschriebene zapfenförmige Erhebung und der Adapter eine dazu korrespondierende Aussparung auf. Über die Messung der mechanischen Belastung der zumindest einen zapfenförmigen Erhebung kann schon im frühen Stadium des Einkuppelvorgangs über die Messung der mechanischen Belastung der zapfenförmigen Erhebung erkannt werden, ob der Kupplungsvorgang betriebsgemäß vonstatten geht, und, falls notwendig, nachgeregelt werden.

Des Weiteren schafft die Erfindung ein Verfahren gemäß Anspruch 10 zum mechanischen Kuppeln eines Kupplungssystems, enthaltend ein erstes Kupplungsteil und mindestens ein zweites Kupplungsteil, das mit dem ersten Kupplungsteil mechanisch kuppelbar ist, gemäß dem mittels zumindest einen sich am ersten Kupplungsteil befindenden, zum ersten Kupplungsteil gehörenden Kraftsensors die mechanische Belastung, die auf das erste Kupplungsteil beim Kuppeln von erstem und zweitem Kupplungsteil wirkt, gemessen wird, und aufgrund der gemessenen Belastung die Position von erstem Kupplungsteil und zweitem Kupplungsteil für den Kupplungsvorgang geeignet nachgeregelt wird.

Vorzugsweise sind, wie oben im Rahmen der Kupplungsanordnung beschrieben, ortsabhängige, d.h., von der relativen Position von erstem und zweitem Kupplungsteil abhängige, Bereiche von Sollwerten definiert, welche angeben, ob die an einem bestimmten Ort gemessene mechanische Belastung, also der Istwert, in einem geeigneten Bereich liegt. Liegt der Istwert außerhalb des Bereichs der Sollwerte, so wird die Position von erstem und zweitem Kupplungsteil nachgeregelt.

Das beschriebene Verfahren ist insbesondere mit einer Kupplungsanordnung wie oben beschrieben durchführbar.

Des Weiteren schafft die Erfindung ein Verfahren gemäß Anspruch 11 zur Messung der mechanischen Belastung eines Kupplungssystems, enthaltend ein erstes Kupplungsteil und mindestens ein zweites Kupplungsteil, das mit dem ersten Kupplungsteil mechanisch kuppelbar ist, gemäß dem mittels zumindest einen sich am ersten Kupplungsteil befindenden, zum ersten Kupplungsteil gehörenden Kraftsensor die mechanische Belastung zwischen dem ersten Teil und dem zweiten Kupplungsteil im gekuppelten Zustand und/oder beim Einkuppeln zumindest über eine Zeitperiode gemessen wird, und die vom Kraftsensor gemessenen Signale von einer sich am ersten Kupplungsteil befindenden, zum ersten Teil gehörenden Auswerteeinheit aufgenommen und als abrufbare Daten in einem Speicher der Auswerteeinheit abgelegt werden.

Das erfindungsgemäße Verfahren ist insbesondere durchführbar mit oben beschriebenem Kupplungssystem.

Die Erfindung wird im Folgenden anhand von Ausführungsbeispielen, welche durch mehrere Figuren dargestellt sind, näher beschrieben. Dabei zeigt:
- Fig. 1: ein Werkzeugwechselsystem zusammen mit ei- nem Roboterarm und einem Werkzeug,
- Fig. 2A: eine schematische Ansicht einer zum Werk- zeugwechselsystem gehörenden Verrieglungs- einheit,
- Fig. 2B: eine schematische Darstellung eines zum Werkzeugwechselsystem gehörenden Adapters,
- Fig. 3: eine schematische Darstellung des mit dem Roboter und dem Werkzeug verbundenen Werk- zeugswechselsystems,
- Fig. 4A: eine erste Detailansicht der Verriegelungs- einheit,
- Fig. 4B: eine zweite Detailansicht der Verriege- lungseinheit,
- Fig. 5A: eine erste Detailansicht des Adapters, und
- Fig. 5B: eine zweite Detailansicht des Adapters.

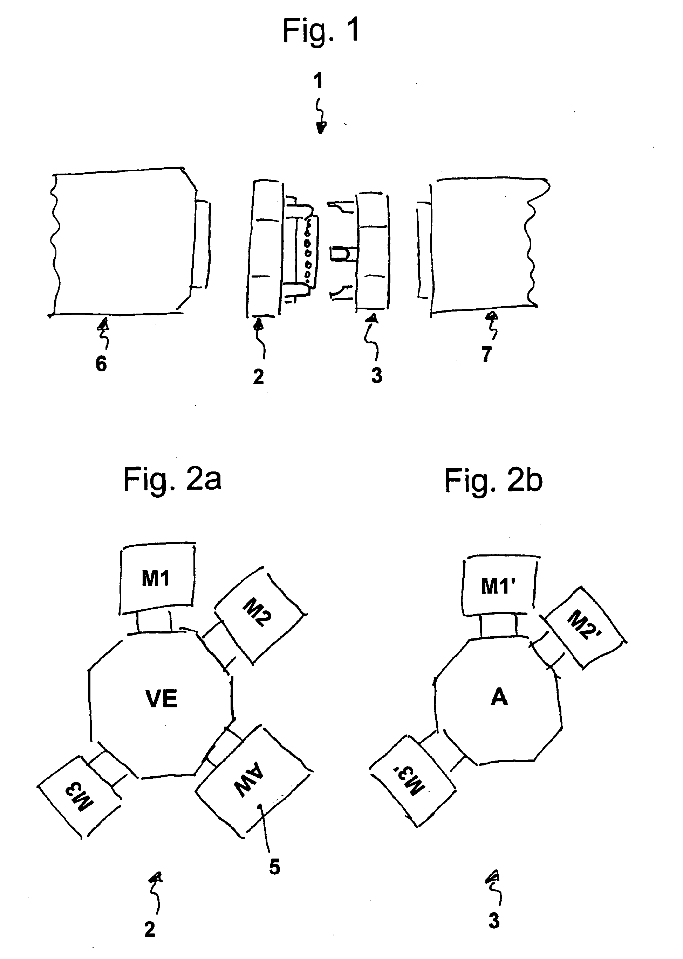

Fig. 1 zeigt eine Ausführungsform eines erfindungsgemäßen Kupplungssystems 1, enthaltend ein erstes Kupplungsteil 2 und ein zweites Kupplungsteil 3, welches mit dem ersten Kupplungsteil 2 über zumindest eine Kupplung kuppelbar ist. In diesem Ausführungsbeispiel ist das Kupplungssystem 1 ein Werkzeugwechselsystem. Das Kupplungsteil 1 ist eine Verriegelungseinheit, das Kupplungsteil 2 ein mit der Verriegelungseinheit kuppelbarer Adapter 3. Die Verriegelungseinheit 2 ist über einen Flansch mit einem Roboter 6 fest verbindbar. Der Adapter 3 ist über einen Flansch mit einem Werkzeug 7 fest verbindbar.

Fig. 2A zeigt eine schematische Darstellung der Verriegelungseinheit 2.

Die Verriegelungseinheit (VE) ist im Wesentlichen flächig aufgebaut. In ihrem Zentrum weist sie eine mechanische Kupplung auf, über die Adapter 3 und Verriegelungseinheit 2 mechanisch stabil kuppelbar sind (Details werden in den Figh. 4 und 5 gezeigt).

Umlaufend der mechanischen Kupplung sind drei Module M1, M2 und M3, und eine Auswerteeinheit 5 angeordnet. Die Module M1, M2 und M3 sind dafür vorgesehen, Stromversorgung, Datenleitungen, Medien usw. von der Roboterseite zum Werkzeug zu übertragen. In diesem Falle weist das Modul M1 zumindest eine Kupplung für die Übertragung von einem gasförmigen Medium, hier Druckluft, auf. Das Modul M2 weist zumindest eine Kupplung für die Übertragung von flüssigem Medium, hier Kühlwasser, auf. Das Modul M3 weist zumindest eine Kupplung für die Übertragung von Strom zur Stromversorgung des Werkzeugs 7 auf.

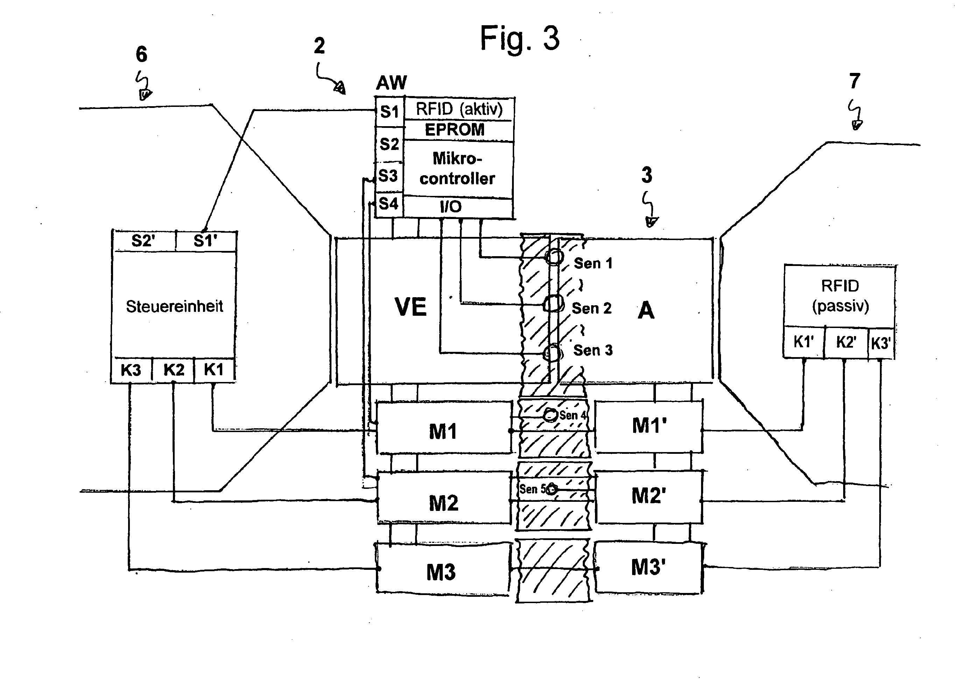

Des Weiteren weist die Verriegelungseinheit mehrere Sensoren Sen1, Sen2, Sen3 und Sen4 auf (siehe hierzu schon Fig. 3). Mittels der Sensoren Sen1, Sen2 und Sen3 ist die mechanische Kupplung zwischen Verriegelungseinheit und Adapter überprüfbar. Mittels des Sensors Sen4 ist die Druckluftkupplung im Kupplungsbereich des Moduls M1 überprüfbar.

Die Sensoren Sen1, Sen2, Sen3 und Sen4 sind mit der Auswerteeinheit 5 verbunden. Die Auswerteeinheit 5 erfasst die Messsignale der Sensoren. Des Weiteren sind über die Auswerteeinheit 5 die Messsignale der Sensoren abrufbar.

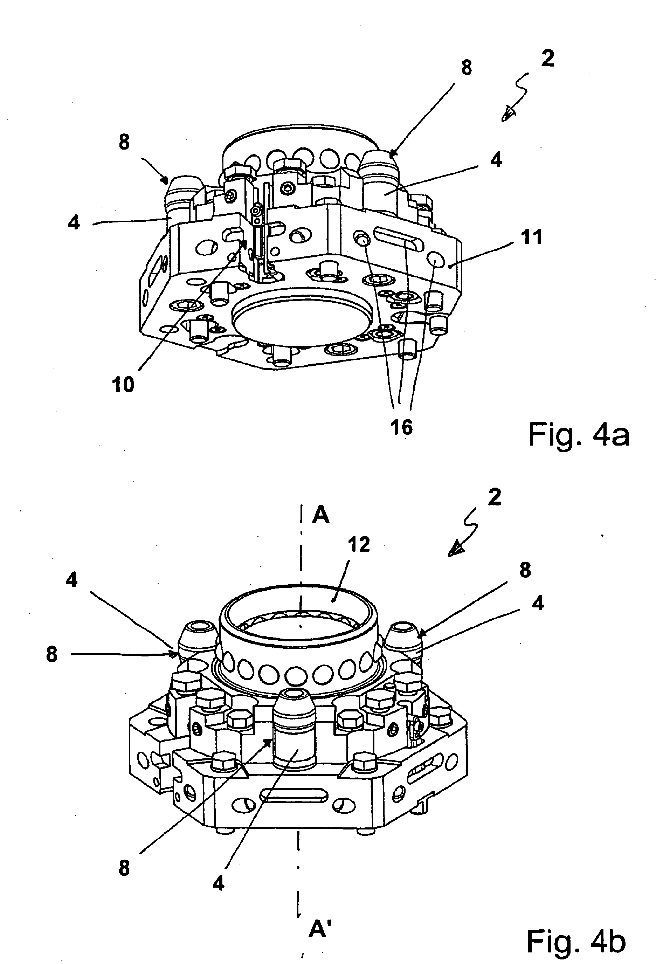

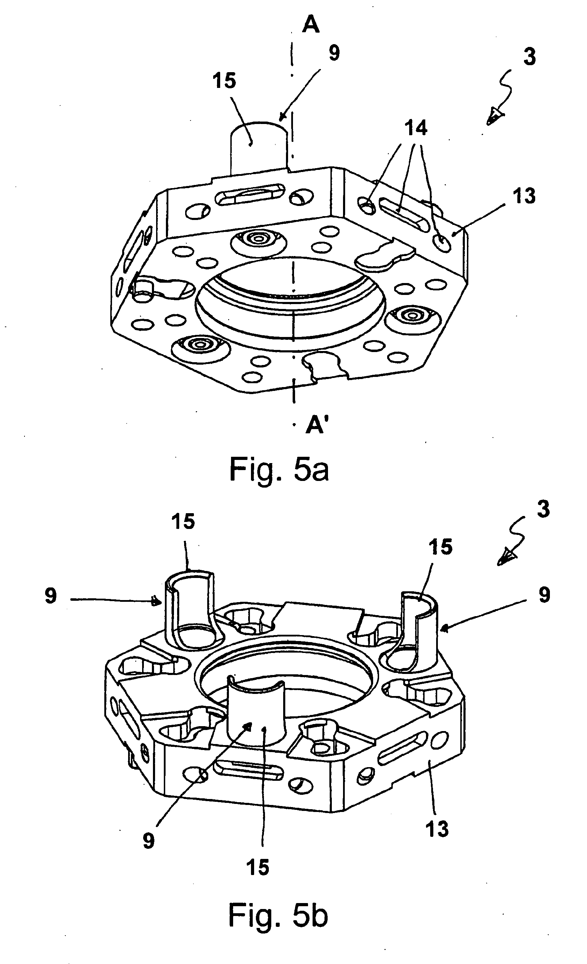

Fig. 2B zeigt eine schematische Darstellung des Adapters 3. Der Adapter 3 ist ebenfalls flächig aufgebaut. Im Zentrum weist er eine mechanische Kupplung auf, über die er mechanisch mit der Verriegelungseinheit 2 kuppelbar ist (Details siehe Fign. 4, 5). Um die mechanische Kupplung außen herum angeordnet sind drei Module M1', M2' und M3'. Die Module M1', M2' und M3' bilden zu den Modulen M1, M2 und M3 der Verriegelungseinheit korrespondierende Kupplungsteile. Beim mechanischen Kuppeln der Verriegelungseinheit 2 und des Adapters 3 werden im gleichen Zuge auch die Module M1, M2 und M3 mit den korrespondierenden Modulen M1', M2' bzw. M3' gekoppelt. Über die Module M1', M2' und M3' werden Druckluft bzw. Kühlwasser bzw. Stromversorgung an das Werkzeug 7 weitergeführt.

Zusätzlich weist der Adapter 3 einen Drucksensor Sen 5 auf, mit dem der Kühlwasserdruck im Bereich der Kühlwasserkopplung des Moduls M2' überprüfbar ist.

Fig. 3 zeigt eine schematische Darstellung des Werkzeugwechselsystems 1, welches über die Verriegelungseinheit 2 mit dem Roboter 6, und über den Adapter 3 mit dem Werkzeug 7 verbunden ist.

Die Auswerteeinheit weist einen dauerhaften Speicher, hier ein EPROM, auf, mittels dem die Signale der mit der Auswerteeinheit verbundenen Sensoren über eine Zeitperiode dauerhaft speicherbar sind.

In diesem Ausführungsbeispiel sind die Sensoren Sen1, Sen2, Sen3 Kraftsensoren, mittels denen die mechanischen Kräfte, die über den Adapter 3 auf die Verriegelungseinheit 2 ausgeübt werden, zumindest bereichsweise messbar sind. Die Sensoreinheit Sen4 ist eine Geräuschsensoreinheit, mittels derer überprüfbar ist, ob die Druckluftverbindung zwischen den Modulen M1 und M1' gasdicht ist. Die Sensoreinheit Sen5 ist eine Drucksensoreinheit, die die Kühlwasserleitung im Bereich der Kupplung der Module M2 und M2' überwacht (alternativ oder zusätzlich wäre für die Überwachung der Kühlwasserleitung auch ein Geräuschsensor möglich). Der mechanische Kupplungsbereich und die Kupplungsbereiche der Module M1 M1', M2 M2' und M3 M3' sind dabei in der Figur 3 durch jeweils schraffierte Flächen dargestellt.

Die Sensoren Sen1, Sen2 und Sen3 sind direkt mit der Auswerteeinheit für die Übertragung der Signale verbunden. Die Sensoreinheit Sen4 ist über das Modul M1 und einer Schnittstelle S4 mit der Auswerteeinheit verbunden, die Sensoreinheit Sen5 ist über das Modul M2', M2 und einer Schnittstelle S3 der Auswerteeinheit mit der Auswerteeinheit verbunden.

Der roboterseitige Ausgangsport der Druckluftleitung ist mit K1 bezeichnet. Die Druckluftleitung führt vom Ausgangsport K1 über das Modul M1 und das Modul M1' zum Eingangsport K1' auf der Werkzeugseite. Analog führt die Kühlwasserleitung von einem Ausgangsport K2 auf der Roboterseite über das Modul M2 und Modul M2' zu einem werkzeugseitigen Eingangsport K2'. Die Stromversorgung führt von einem roboterseitigen Ausgangsport K3 über das Modul M3 und das Modul M3' zu einem werkzeugseitigen Eingangsport K3'.

Roboterseitig ist eine Steuereinheit vorgesehen, mittels der die Ausgangsports K1, K2 und K3 kontrolliert werden können. Des Weiteren weist die Steuereinheit eine Schnittstelle S1' auf, über die sie über eine Schnittstelle S1 der Auswerteeinheit mit der Auswerteeinheit gekoppelt ist. Zusätzlich weist die Steuereinheit eine Schnittstelle S2' auf, die dafür verwendet werden kann, um die Steuereinheit an ein Netzwerk oder ähnlichem anzuschließen.

Die Auswerteeinheit weist neben einem Input-Output-Bereich, der zur Steuerung und Abfrage der Sensoren vorgesehen ist, eine CPU, hier ausgeführt als Mikrocontroller, einen dauerhaften Speicher und Schnittstellen S1, S2, S3 und S4 auf, wie teilweise oben schon erwähnt wurde. Die Auswerteeinheit nimmt die Messsignale der Sensoren Sen1 bis Sen5 auf, bearbeitet diese und legt diese als abrufbare Daten im dauerhaften Speicher ab. Diese Daten sind über eine geeignete Schnittstelle abrufbar. In diesem Ausführungsbeispiel können die Daten insbesondere über die Schnittstelle S2 über Fernübertragung abgerufen werden. Alternativ wäre es ebenso möglich, die Daten über eine elektrische Verbindung, insbesondere ein Datenkabel, eine Funkverbindung oder eine optische Verbindung, insbesondere über ein Lichtleiterkabel, bei geeignet ausgebildeter Schnittstelle abzurufen.

Des Weiteren enthält die Auswerteeinheit eine Vorrichtung, mit der zumindest ein kurzzeitiger Stromausfall überbrückt werden kann. In diesem Fall ist hierfür ein Kondensator mit hoher Kapazität vorgesehen.

Des Weiteren weist die Auswerteeinheit eine aktive RFID(Radio Frequency Identification)-Einheit auf, die mit einer korrespondieren passiven RFID-Einheit im Werkzeug 7 korrespondieren kann, und somit ermöglicht, festzustellen, welches Werkzeug zurzeit mit dem Werkzeugwechselsystem und damit dem Roboter verbunden ist. Diese Information ist ebenfalls im dauerhaften Speicher ablegbar.

Die Fign. 4A und 4B zeigen eine Detailansicht der Verriegelungseinheit 2. Dargestellt ist allerdings nur der Bereich, der zum einen mit dem Roboterflansch verbindbar ist und über den die mechanische Kupplung zum Adapter herstellbar ist.

Die Verriegelungseinheit weist eine hexagonale, flächige Grundplatte 11 auf. In der Mitte dieser Grundplatte 11 ist eine pneumatische Verriegelungseinheit 12 angeordnet (alternativ wäre auch eine elektrische Verriegelungseinheit denkbar). An den Seiten der Grundplatte sind mehrere Befestigungsstellen 16 vorgesehen, die die Befestigung verschiedener Bauteile, insbesondere der Module M1, M2 und M3 sowie der Auswerteeinheit 5 ermöglichen.

Umlaufend der pneumatischen Verriegelungseinheit 12 sind drei zapfenförmige Erhebungen 8 angeordnet. Die drei zapfenförmigen Erhebungen 8 sind in einer gemeinsamen Ebene in einem konstanten Radius gleichmäßig um die Verriegelungseinheit 12 verteilt angeordnet. Zapfenförmige Erhebungen 8 und Verriegelungseinheit 12 sind entlang einer gemeinsamen Verbindungsachse A, A' ausgerichtet.

Die Fign. 5A und 5B zeigen eine Detailansicht des Adapters 3. Allerdings ist hier ausschließlich der Bereich des Adapters 3 dargestellt, der zur mechanischen Kupplung mit der Verriegelungseinheit 2 und mit dem Werkzeug 7 vorgesehen ist.

Analog zur Verriegelungseinheit 2 weist der Adapter 3 eine hexagonale Grundplatte 13 auf. Das Zentrum dieser Grundplatte 13 ist für die mechanische Verriegelung mit der Verriegelungseinheit 2 vorgesehen. Hierfür ist eine kreisförmige Bohrung mit Rillen in den Außenflächen vorgesehen, welche Hinterschnitte bilden, und über die sich die Verriegelung 12 der Verriegelungseinheit 2 mechanisch in dem Adapter 3 verspannen kann.

An der Außenfläche der Grundplatte 13 sind über Passfeder und Nut verschiedene Befestigungsmöglichkeiten 14 gegeben, durch die der mechanische Anschluss von Modulen usw. ermöglicht wird.

Des Weiteren sind auf der Grundplatte 13 drei halbschalenförmige Elemente 15 fest angeordnet, die zu den zapfenförmigen Erhebungen 8 der Verriegelungseinheit 2 korrespondierende Aussparungen 9 bilden. Beim Kupplungsvorgang von Adapter 3 und Verriegelungseinheit 2 bewirken die zapfenförmigen Erhebungen 8 und die dazu korrespondierenden Aussparungen 9 des Adapters 3, dass der Adapter 3 und die Verriegelungseinheit 2 auf einer definierten Achse AA' und in einer definierten Lage miteinander verbunden werden. Die zapfenförmigen Erhebungen 8 und durch die Erhebungen 15 gebildeten Aussparungen 9 führen den Adapter und die Verriegelungseinheit beim Einkuppeln.

Die zapfenförmigen Erhebungen 8 der Verriegelungseinheit 2 sind mit einer konischen Spitze ausgebildet. Auf diese Weise wird das "Einfädeln" des Adapters 3 erleichtert.

Des Weiteren sind die zapfenförmigen Erhebungen 8 der Verriegelungseinheit 2 und die halbschalenförmigen Erhebungen 9 des Adapters 3 derart ausgebildet, dass beim Einkuppeln ein flächiger Kontakt zwischen allen zapfenförmigen Erhebungen 8 und halbschalenförmigen Erhebungen 15 besteht. Des Weiteren ist der Boden der halbschalenförmigen Erhebungen 15 des Adapters 3 konisch ausgebildet, wodurch im eingekoppelten Zustand von Adapter 3 und Verriegelungseinheit 2 eine Verklemmung zwischen Verriegelungseinheit 2 und Adapter 3 bewirkt wird.

Die Kraftsensoren Sen1, Sen2 und Sen3 sind jeweils in einer zapfenförmigen Erhebung 8 der Verriegelungseinheit angeordnet. Mit den Kraftsensoren ist damit die mechanische Belastung der zapfenförmigen Erhebung 8 messbar. Sobald der Adapter 3 mit seinen halbschalenförmigen Erhebungen 15 die zapfenförmigen Erhebungen 8 der Verriegelungseinheit 2 berührt, wird eine mechanische Belastung auf die zapfenförmigen Erhebungen 8 ausgeübt, die von den Sensoren detektierbar ist. Die mechanische Belastung der einzelnen zapfenförmigen Erhebungen 8 kann über den gesamten Einkupplungsvorgang gemessen und gespeichert werden. Auch im eingekuppelten Zustand von Adapter 3 und Verriegelungseinheit 2 kann über die zapfenförmigen Erhebungen 8 die mechanische Belastung gemessen werden.

Über den Adapter 3 überträgt sich die Belastung, die auf das mit dem Adapter 3 verbundene Werkzeug 7 wirkt, auch auf die zapfenförmigen Erhebungen 8. Damit ist es möglich, über die Messung der mechanischen Belastung der zapfenförmigen Erhebung 8 auf die Belastung des mit dem Adapter 3 verbundenen Werkzeugs 7 zu schließen. Aufgrund der Anordnung der Sensoren können beispielsweise auch Biegemomente und Torsionsmomente, die insbesondere direkt oder indirekt über das Werkzeug auf das Werkzeugwechselsystem (oder Multikupplungssystem) wirken, gemessen werden.

Des Weiteren weist die Verriegelungseinheit 2 einen Kupplungssensor 10 auf, mittels dem feststellbar ist, ob Verriegelungseinheit 2 und Adapter 3 miteinander gekuppelt sind. In diesem Ausführungsbeispiel ist der Kupplungssensor ein magnetischer Sensor 10, der in einer Aussparung in der hexagonalen Grundplatte 11 randseitig eingebracht ist. Ist der Adapter 3 vollständig mit der Verriegelungseinheit 2 verbunden, so gibt der Kupplungssensor 10 ein Signal. Das Signal wird von der Auswerteeinheit erfasst und ebenfalls im Speicher abgelegt.

Des Weiteren weist die Verriegelungseinheit zumindest einen Positionssensor auf, der die Position von Verriegelungseinheit und Adapter in zumindest einer Position vor der Kupplungsposition überprüft.

Roboter mit verbundener Verriegelungseinheit 2 und Adapter 3 mit verbundenem Werkzeug 7 bilden eine Kupplungsanordnung, die es erlaubt, das Werkzeug 7 automatisch mit dem Roboter 6 zu kuppeln.

Ausgangspunkt ist beispielsweise, dass sich das Werkzeug 7 mit verbundenem Adapter 3 in einer Werkzeugablage befindet, und der Roboter 6 über die Verriegelungseinheit 2 nun das Werkzeug 7 aufnehmen soll.

Dass der Roboter sich derart in Position bringt, dass Verriegelungseinheit 2 und Adapter 3 kurz vor dem Kontakt stehen, ist unkritisch und ohne Probleme automatisierbar. Kritisch ist der letzte Schritt des Einkuppelvorgangs, bei dem Adapter 3 und Verriegelungseinheit 2 in mechanischen Kontakt miteinander treten. Hier können schon kleine Positionsfehler zwischen Adapter 3 und Verriegelungseinheit 2 zu hohen mechanischen Belastungen führen, die zu einer Beschädigung des Werkzeugwechselsystems oder sogar des Roboters des Werkzeugs 7 führen können.

Erfindungsgemäß ist die Steuereinheit des Roboters, die die Bewegung des Roboters kontrolliert, mit der Auswerteeinheit 5 verbunden. Die Auswerteeinheit 5 weist ein Programm auf, mit dem die Signale der Kraftsensoren ausgewertet werden können und die als geeignete Signale an die Steuereinheit des Roboters weitergegeben werden können. Über die Kraftsensoren, die die mechanische Belastung messen, die auf die zapfenförmigen Erhebungen 8 der Verriegelungseinheit 2 wirken, wird die mechanische Belastung, die im letzten Schritt des Einkuppelns von Adapter 3 auf die Verriegelungseinheit 2 wirkt, frühzeitig erfasst. Die Messwerte können dazu verwendet werden, um diese mit Sollwerten zu vergleichen, und, falls eine gravierende Abweichung festgestellt wird, um geeignete Steuersignale an die Steuereinheit des Roboters zu senden, damit dieser die Position von Verriegelungseinheit 2 und Adapter 3 geeignet korrigieren kann. Auf diese Weise ist ein nahezu belastungsfreies automatisches Kuppeln von Adapter 3 und Verriegelungseinheit 2 möglich.

Insbesondere kann auf die Weise auch das "Teaching" des Roboters automatisiert werden. Beim "Teaching" wird der Bewegungsablauf des Roboters festgelegt, den der Roboter verfahren muss, um das Werkzeug aus der Werkzeugablage aufzunehmen und wieder abzulegen. Fehler, die bei einem manuellen "Teaching" insbesondere dadurch, dass der Bewegungsablauf des Roboters nicht exakt genug eingestellt wurde, vorkommen können, können durch die vorgeschlagene Automatisierung verhindert werden.

Eine erfindungsgemäß bevorzugte Verwendung des beschriebenen Systems ist die Überwachung des Kupplungsbereichs, insbesondere die Überwachung der mechanischen Belastung im Kupplungsbereich, während des Einkuppelns und auch während des Betriebszustandes. Auf diese Weise ist es möglich, Fehler im Kupplungsbereich schnell zu erkennen, die Betriebsdauer der gekuppelten Partner möglichst auszureizen, und unsachgemäße Handhabung, insbesondere unsachgemäße Überlastung zu verhindern. Über die Dokumentation der Signale ist es insbesondere möglich, den Betrieb des Kupplungssystems und der damit verbundenen Partner auch nachträglich zu verfolgen, wodurch ermöglicht wird, Fehlerursachen festzustellen.

## Patentansprüche

1. Kupplungssystem (1), enthaltend ein erstes Kupplungsteil (2), zumindest ein zweites Kupplungteil (3), welches mit dem ersten Kupplungsteil über zumindest eine Kupplung kuppelbar ist, und zumindest einen Kraftsensor (4), wobei das erste Kupplungsteil eine Auswerteeinheit (5) aufweist, die mit dem mindestens einen Kraftsensor zum Erfassen von Messsignalen verbindbar ist, und die von der Auswerteeinheit erfassten Messsignale über die Auswerteeinheit abrufbar sind, wobei mittels des mindestens einen Kraftsensors die Kupplung im Kupplungsbereich überprüfbar ist, und wobei das erste Kupplungsteil zumindest eine zapfenförmige Erhebung und das zweite Kupplungsteil eine zu der zapfenförmigen Erhebung korrespondierende Aussparung aufweist und der Kraftsensor derart angeordnet ist, dass die mechanische Belastung des Zapfens mindestens in zwei Richtungen, bevorzugt in allen drei Raumrichtungen, messbar ist.

2. Kupplungssystem nach Anspruch 1, **dadurch gekennzeichnet, dass** die Auswerteeinheit (5) einen dauerhaften Speicher aufweist, mittels dem die Signale des Sensors über eine Zeitperiode dauerhaft speicherbar sind.

3. Kupplungssystem nach einem der vorhergehenden Ansprüche, **dadurch gekennzeichnet, dass** das Kupplungssystem ein Multiktipplungssystem, vorzugsweise ein Werkzeugwechselsystem ist, wobei das erste Kupplungsteil eine Verriegelungseinheit (2) für die Befestigung an einem Roboter (6) und das zweite Kupplungsteil ein Adapter (3) für die Befestigung an einem Werkzeug (7) ist.

4. Kupplungssystem nach Anspruch 3, **dadurch gekennzeichnet, dass** mittels dem mindestens einen Kraftsensor (4), die mechanischen Kräfte, die über den Adapter (3) auf die Verriegelungseinheit (2) ausgeübt werden, zumindest bereichsweise messbar sind.

5. Kupplungssystem nach Anspruch 4, **dadurch gekennzeichnet, dass** die Verriegelungseinheit (2) die zumindest eine zapfenförmige Erhebung (8) aufweist, und der Adapter (3) die zumindest eine zu der zapfenförmigen Erhebung korrespondierende Aussparung (9) aufweist, wobei zapfenförmige Erhebung (8) und Aussparung (9) derart ausgebildet und angeordnet sind, dass beim Kuppeln des Adapters (3) und der Verriegelungseinheit (2) die zapfenförmige Erhebung der Verriegelungseinheit (2) in die Aussparung des Adapters (3) zur Führung des Adapters (3) eingreift, und im gekuppelten Zustand der Adapter (3) über den Zapfen (8) der Verriegelungseinheit (2) mechanisch mit der Verriegelungseinheit (2) verbunden ist, und der Kraftsensor derart angeordnet ist, dass mittels des Kraftsensors eine mechanische Belastung den zapfenförmigen Erhabung (8) messbar ist.

6. Kupplungssystem nach Anspruch 5, **dadurch gekennzeichnet, dass** der mindestens eine Kraftsensor in oder an der mindestens einen zapfenförmigen Erhebung (8) angeordnet ist.

7. Kupplungssystem nach einem der Ansprüche 3 bis 6, **dadurch gekennzeichnet, dass** die Verriegelungseinheit zumindest einen Positionssensor aufweist, der die Position von Verriegelungseinheit und Adapter in zumindest einer Position vor der Kupplungsposition überprüft.

8. Kupplungssystem nach einem der Ansprüche 3 bis 7, **dadurch gekennzeichnet, dass** die Verriegelungseinheit einen Kupplungssensor (10) aufweist, mittels dem feststellbar ist, ob Verriegelungseinheit (2) und Adapter (3) gekuppelt sind.

9. Kupplungssystem nach einem der Ansprüche 4 bis 8, enthaltend eine Kupplungsvorrichtung, mittels der der mindestens eine Adapter und Verriegelungseinheit des Multikupplungssystems miteinander zumindest teilweise automatisch kuppelbar sind, sowie eine Steuereinheit, über die die Kupplungsvorrichtung steuerbar ist und die die Signale des mindestens einen Kraftsensors erfassen und bearbeiten kann, zum zumindest teilweisen automatischen Nachregeln der Position von Verriegelungseinheit (2) und Adapter (3) während des Einkuppelns.

10. Verfahren zum mechanischen Kuppeln eines Kupplungssystems, enthaltend ein erstes Kupplungsteil (2) und mindestens ein zweites Kupplungsteil (3), das mit dem ersten Kupplungsteil mechanisch kuppelbar ist, gemäß dem mittels zumindest einen sich am ersten Kupplungsteil befindenden, zum ersten Kupplungsteil gehörenden Kraftsensors (4) die mechanische Belastung, die auf das erste Kupplungsteil beim Kuppeln von ersten und zweiten Kupplungsteil wirkt, gemessen wird, und aufgrund der gemessenen Belastung die Position von ersten Kupplungsteil und zweiten Kupplungsteil für den Kupplungsvorgang geeignet nachgeregelt wird, wobei das erste Kupplungsteil zumindest eine zapfenförmige Erhebung und das zweite Kupplungsteil eine zu der zapfenförmigen Erhebung korrespondierende Aussparung aufweist und der Kraftsensor derart angeordnet ist, dass die mechanische Belastung des Zapfens mindestens in zwei Richtungen, bevorzugt in allen drei Raumrichtungen, messbar ist.

11. Verfahren zur Messung der mechanischen Belastung eines Kupplungssystems, enthaltend ein erstes Kupplungsteil (2) und mindestens ein zweites Kupplungsteil (3), das mit dem ersten Kupplungsteil mechanisch kuppelbar ist, gemäß dem mittels zumindest einen sich am ersten Teil (2) befindenden, zum ersten Teil gehörenden Kraftsensor (4) die mechanische Belastung zwischen dem ersten Kupplungsteil und dem zweiten Kupplungsteil im gekuppelten Zustand und/oder beim Einkuppeln zumindest über eine Zeitperiode gemessen wird, und die vom Kraftsensor gemessenen Signale von einer sich am ersten Kupplungsteil befindenden, zum ersten Kupplungsteil gehörenden Auswerteeinheit (5) aufgenommen und als abrufbare Daten in einem Speicher der Auswerteeinheit (5) abgelegt werden, wobei das erste Kupplungsteil zumindest eine zapfenförmige Erhebung und das zweite Kupplungsteil eine zu der zapfenförmigen Erhebung korrespondierende Aussparung aufweist und der Kraftsensor derart angeordnet ist, dass die mechanische Belastung des Zapfens mindestens in zwei Richtungen, bevorzugt in allen drei Raumrichtungen, messbar ist.

## Claims

1. Coupling system (1), containing a first coupling part (2), at least one second coupling part (3) which can be coupled to the first coupling part via at least one coupling, and at least one force sensor (4), the first coupling part having an evaluation unit (5) which can be connected to the at least one force sensor for detecting measuring signals, and the measuring signals detected by the evaluation unit being able to be called up via the evaluation unit, the coupling in the coupling region being able to be checked by means of the at least one force sensor and the first coupling part having at least one peg-shaped raised portion, and the second coupling part having a recess corresponding to the peg-shaped raised portion and the force sensor being disposed in such a manner that the mechanical loading of the peg can be measured at least in two directions, preferably in all three spatial directions.

2. Coupling system according to claim 1, **characterised in that** the evaluation unit (5) has a permanent memory, by means of which the signals of the sensor can be stored permanently over a period of time.

3. Coupling system according to one of the preceding claims, **characterised in that** the coupling system is a multicoupling system, preferably a tool change system, the first coupling part being a locking unit (2) for attachment to a robot (6) and the second coupling part an adaptor (3) for attachment to a tool (7).

4. Coupling system according to claim 3, **characterised in that** the mechanical forces which are exerted on the locking unit (2) via the adaptor (3) can be measured at least in regions by means of the at least one force sensor (4).

5. Coupling system according to claim 4, **characterised in that** the locking unit (2) has the at least one peg-shaped raised portion (8), and the adaptor (3) has the at least one recess (9) corresponding to the peg-shaped raised portion, peg-shaped raised portion (8) and recess (9) being configured and disposed in such a manner that, during coupling of the adaptor (3) and the locking unit (2), the peg-shaped raised portion of the locking unit (2) engages in the recess of the adaptor (3) for guiding the adaptor (3) and, in the coupled state, the adaptor (3) is connected mechanically to the locking unit (2) via the peg (8) of the locking unit (2), and the force sensor is disposed in such a manner that a mechanical loading of the peg-shaped raised portion (8) can be measured by means of the force sensor.

6. Coupling system according to claim 5, **characterised in that** the at least one force sensor is disposed in or on the at least one peg-shaped raised portion (8).

7. Coupling system according to one of the claims 3 to 6, **characterised in that** the locking unit has at least one position sensor which checks the position of locking unit and adaptor in at least one position before the coupling position.

8. Coupling system according to one of the claims 3 to 7, **characterised in that** the locking unit has a coupling sensor (10), by means of which it can be established whether locking unit (2) and adaptor (3) are coupled.

9. Coupling system according to one of the claims 4 to 8, containing a coupling device, by means of which the at least one adaptor and locking unit of the multicoupling system can be coupled automatically to each other at least partially, as well as a control unit, via which the coupling device can be controlled and which can detect and process the signals of the at least one force sensor, for at least partial automatic readjustment of the position of locking unit (2) and adaptor (3) during coupling.

10. Method for mechanical coupling of a coupling system, containing a first coupling part (2) and at least one second coupling part (3) which can be coupled mechanically to the first coupling part, according to which, by means of at least one force sensor (4) which is located on the first coupling part and belongs to the first coupling part, the mechanical loading which acts on the first coupling part during coupling of first and second coupling part is measured, and, on the basis of the measured loading, the position of first coupling part and second coupling part is suitably readjusted for the coupling process, wherein the first coupling part has at least one peg-shaped raised portion, and the second coupling part has a recess corresponding to the peg-shaped raised portion and the force sensor is disposed in such a manner that the mechanical loading of the peg can be measured at least in two directions, preferably in all three spatial directions.

11. Method for measuring the mechanical loading of a coupling system, containing a first coupling part (2) and at least one second coupling part (3) which can be coupled mechanically to the first coupling part, according to which, by means of at least one force sensor (4) which is located on the first part (2) and belongs to the first part, the mechanical loading between the first coupling part and the second coupling part is measured in the coupled state and/or during coupling thereof at least over a period of time, and the signals measured by the force sensor are picked up by an evaluation unit (5) which is located on the first coupling part and belongs to the first coupling part and are stored in a memory of the evaluation unit (5) as retrievable data, wherein the first coupling part has at least one peg-shaped raised portion, and the second coupling part has a recess corresponding to the peg-shaped raised portion and the force sensor is disposed in such a manner that the mechanical loading of the peg can be measured at least in two directions, preferably in all three spatial directions.

## Revendications

1. Système de couplage (1), comprenant une première partie de couplage (2), au moins une seconde partie de couplage (3) qui peut être couplée à la première partie de couplage via au moins un couplage, et au moins un capteur de force (4), la première partie de couplage comprenant une unité d'interprétation (5) qui peut être connectée à l'au moins un capteur de force pour détecter des signaux de mesure, et les signaux de mesure détectés par l'unité d'interprétation pouvant être appelés par l'unité d'interprétation, le couplage dans la région de couplage pouvant être contrôlé au moyen de l'au moins un capteur de force, et comprenant au moins une partie en forme de goujon dans la première partie de couplage et un évidement dans la seconde partie de couplage correspondant à la partie en forme de goujon, et le capteur de force étant disposé de telle sorte que la charge mécanique du goujon puisse être mesurée au moins dans deux directions, de préférence dans les trois directions de l'espace.

2. Système de couplage selon la revendication 1, **caractérisé en ce que** l'unité d'interprétation (5) comprend une mémoire permanente au moyen de laquelle les signaux du capteur peuvent être stockés de façon permanente pendant une période temporelle.

3. Système de couplage selon l'une des revendications précédentes, **caractérisé en ce que** le système de couplage est un système multicouplage, de préférence un système de changement d'outils, la première partie de couplage étant une unité de verrouillage (2) pour la fixation à un robot (6) et la seconde partie de couplage étant un adaptateur (3) pour la fixation à un outil (7).

4. Système de couplage selon la revendication 3, **caractérisé en ce que**, au moyen de l'au moins un capteur de force (4), les forces mécaniques qui sont exercées sur l'unité de verrouillage (2) via l'adaptateur (3) peuvent être mesurées dans au moins des régions.

5. Système de couplage selon la revendication 4, **caractérisé en ce que** l'unité de verrouillage (2) comprend au moins une partie en forme de goujon (8), et l'adaptateur (3) comprend au moins un évidement (9) correspondant à la partie en forme de goujon, la partie en forme de goujon (8) et l'évidement (9) étant configurés et disposés de telle sorte que, pendant le couplage de l'adaptateur (3) avec l'unité de verrouillage (2), la partie en forme de goujon de l'unité de verrouillage (2) s'enfile dans l'évidement de l'adaptateur (3) pour permettre le guidage de l'adaptateur (3) et, dans l'état couplé, l'adaptateur (3) est connecté mécaniquement à l'unité de verrouillage (2) via le goujon (8) de l'unité de verrouillage (2), et le capteur de force est disposé de telle sorte que la charge mécanique de la partie en forme de goujon (8) puisse être mesurée au moyen du capteur de force.

6. Système de couplage selon la revendication 5, **caractérisé en ce que** l'au moins un capteur de force est disposé dans ou sur l'au moins une partie en forme de goujon (8).

7. Système de couplage selon l'une des revendications 3 à 6, **caractérisé en ce que** l'unité de verrouillage comprend au moins un capteur de position qui vérifie que la position de l'unité de verrouillage et de l'adaptateur est dans au moins une position avant la position de verrouillage.

8. Système de couplage selon l'une des revendications 3 à 7, **caractérisé en ce que** l'unité de verrouillage comprend un capteur de couplage (10) au moyen duquel il peut être établi si oui ou non l'unité de verrouillage (2) et l'adaptateur (3) sont couplés.

9. Système de couplage selon l'une des revendications 4 à 8, comprenant un dispositif de couplage, au moyen duquel l'au moins un adaptateur et unité de verrouillage du système multicouplage peuvent être couplés automatiquement l'un à l'autre au moins partiellement, de telle sorte qu'une unité de commande via laquelle le dispositif de couplage peut être commandé et qui peut détecter et traiter les signaux de l'au moins un capteur de force, pour un réajustement automatique au moins partiel de la position de l'unité de verrouillage (2) et de l'adaptateur (3) pendant le couplage.

10. Procédé de couplage mécanique d'un système de couplage, comprenant une première partie de couplage (2) et au moins une seconde partie de couplage (3) qui peut être couplée mécaniquement à la première partie de couplage, selon lequel, au moyen d'au moins un capteur de force (4) qui et situé sur la première partie de couplage et qui appartient à la première partie de couplage, la charge mécanique qui agit sur la première partie de couplage pendant le couplage des première et seconde parties de couplage est mesurée, et, sur la base de la charge mesurée, la position de la première partie de couplage et de la seconde partie de couplage est réajustée de façon appropriée pendant le processus de couplage, comprenant au moins une partie en forme de goujon dans la première partie de couplage et un évidement dans la seconde partie de couplage correspondant à la partie en forme de goujon, et le capteur de force étant disposé de telle sorte que la charge mécanique du goujon puisse être mesurée au moins dans deux directions, de préférence dans les trois directions de l'espace.

11. Procédé de couplage mécanique d'un système de couplage, comprenant une première partie de couplage (2) et au moins une seconde partie de couplage (3) qui peut être couplée mécaniquement à la première partie de couplage, selon lequel, au moyen d'au moins un capteur de force (4) qui et situé sur la première partie de couplage (2) et qui appartient à la première partie de couplage, la charge mécanique entre la première partie de couplage et la seconde partie de couplage est mesurée dans l'état couplé et/ou pendant leur couplage au moins sur une période temporelle, et les signaux mesurés par le capteur de force sont saisis par l'unité d'interprétation (5) qui est située sur la première partie de couplage et qui appartient à la première partie de couplage et sont stockés dans une mémoire de l'unité d'interprétation (5) en tant que données récupérables, comprenant au moins une partie en forme de goujon dans la première partie de couplage et un évidement dans la seconde partie de couplage correspondant à la partie en forme de goujon, et le capteur de force étant disposé de telle sorte que la charge mécanique du goujon puisse être mesurée au moins dans deux directions, de préférence dans les trois directions de l'espace.
